# EUROPEAN PATENT APPLICATION

(11) **EP 4 850 945 A1**
(43) Date of publication of application: **09.12.2026**
(21) Application number: 25180098.3
(22) Date of filing: 02.06.2025
(51) Int. Cl.: B60K 1/04

(54) **BATTERY SUSPENSION ARRANGEMENT WITH GRAVITATIONALLY SUPPORTED SUPPORT FORKS**

(71) Applicant: Volvo Truck Corporation, 405 08 Göteborg (SE)
(72) Inventor: LANDVIK, Sondre, 417 61 GÖTEBORG (SE); ÖSTMAN, Bill, 436 57 HOVÅS (SE)
(74) Representative: Kransell & Wennborg KB

(57) **Abstract**

The present disclosure relates to a battery suspension arrangement for a vehicle, the battery suspension arrangement comprising a pair of frame brackets configured to be mounted to a frame of the vehicle, each frame bracket comprising a frame bushing; a battery bracket comprising a pair of support forks, each support fork being shaped to engage and rest on a respective frame bushing by gravitational support; wherein the battery bracket extends in a first direction between the pair of support forks, and in a second direction perpendicular to the first direction; the battery bracket further comprising a first traction battery interface and a second traction battery interface, each configured to support a traction battery module; wherein the first and second traction battery interfaces are arranged along the second direction and spaced apart from each other in the first direction.

## Description

### TECHNICAL FIELD

The disclosure relates generally to battery suspension. In particular aspects, the disclosure relates to a battery suspension arrangement with gravitationally supported support forks. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electric vehicles, including heavy-duty commercial vehicles, increasingly rely on high-voltage battery systems integrated into the vehicle chassis. As battery capacities grow and installation complexity increases, there is a continuous need for improved strategies for supporting, protecting, and integrating battery modules within the vehicle frame. Factors such as assembly efficiency, serviceability, and structural safety demand further development in this technical field.

### SUMMARY

According to a first aspect of the disclosure, there is provided a battery suspension arrangement for a vehicle, the battery suspension arrangement comprising a pair of frame brackets configured to be mounted to a frame of the vehicle, each frame bracket comprising a frame bushing; a battery bracket comprising a pair of support forks, each support fork being shaped to engage and rest on a respective frame bushing by gravitational support; wherein the battery bracket extends in a first direction between the pair of support forks, and in a second direction perpendicular to the first direction; the battery bracket further comprising a first traction battery interface and a second traction battery interface, each configured to support a traction battery module; wherein the first and second traction battery interfaces are arranged along the second direction and spaced apart from each other in the first direction. The first aspect of the disclosure may seek to address the problem of transferring vibrations and torsional loads from the vehicle frame into traction battery modules, which may adversely affect the durability of sensitive electrical components. The inclusion of a pair of support forks shaped to engage and rest on frame bushings by gravitational support enables passive mechanical decoupling between the battery bracket and the vehicle frame. By allowing the battery bracket to extend between the support forks and to include spaced-apart traction battery interfaces, the first aspect further facilitates stable support of multiple battery modules and contributes to simplified and consistent assembly without the need for complex fasteners. A technical benefit may thus include the ability to mechanically isolate traction battery modules from frame-induced torsion and vibration, thereby reducing mechanical stress on electrical components and improving long-term durability. An additional advantage may be gained through the use of gravitational support, which enables faster and less complex assembly operations, potentially enhancing manufacturing efficiency and service accessibility.

As used herein, the term "support forks" should be construed as referring to structural portions of the battery bracket that are configured to engage and rest on respective frame bushings. Each support fork is shaped to allow gravitational support of the battery bracket without requiring mechanical fastening to the frame bushing. The support forks may include features such as open-ended slots or cradling surfaces that receive the frame bushings through vertical and/or horizontal movement, thereby enabling passive suspension of the battery bracket relative to the vehicle frame.

Further, the definition "gravitational support" refers to a structural arrangement in which the support forks of the battery bracket are shaped and positioned to engage the frame bushings such that the weight of the battery bracket, and any attached battery module, is transmitted downwardly by gravity to the frame bushings. No additional fasteners such as bolts, screws, or clamps are hence required to achieve this support. The engagement may rely on surface contact, recesses, or mating geometries that prevent lateral movement while allowing vertical loading by gravity."

Optionally in some examples, including in at least one preferred example, the pair of frame brackets is configured to be mounted to a longitudinal side member of the vehicle frame at a distance from each other along a longitudinal direction of the vehicle. A technical benefit may include improved packaging compatibility and structural integration with traditional longitudinally extending vehicle frames, enabling distributed load support and facilitating side-access installation of battery modules along the vehicle's longitudinal axis.

Optionally in some examples, including in at least one preferred example, each frame bushing comprises an abutment portion configured to be in abutment with a respective support fork, the abutment portion comprising an elastomeric material. A technical benefit may include reduction of vibration and torsional load transmission from the vehicle frame into the battery bracket, as the elastomeric abutment portions of the frame bushings may provide a flexible contact interface with the support forks. Improved durability of the battery system may thereby be provided, and sensitive electrical components may be protected.

Optionally in some examples, including in at least one preferred example, each support fork comprises an open-ended slot configured to receive a respective frame bushing through vertical and/or horizontal movement. A technical benefit may include that a simplified and flexible installation of the battery bracket onto the vehicle frame may be enabled, as the open-ended slots of the support forks allow the frame bushings to be received through vertical and/or horizontal movement. This may facilitate substantially straightforward positioning during assembly and reduce constraints on alignment.

Optionally in some examples, including in at least one preferred example, each frame bushing is at least partly received within a respective support fork. A technical benefit may include improved positional stability of the battery bracket relative to the vehicle frame. In particular since each frame bushing is at least partly received within a respective support fork a defined seating interface that resists lateral or vertical displacement during operation may be provided which may contribute to reliable load transfer.

Optionally in some examples, including in at least one preferred example, each support fork is structurally integrated with the battery bracket. A technical benefit may include increased structural rigidity as well as a reduced number of parts. As each support fork is structurally integrated with the battery bracket the need for separate attachment interfaces may be eliminated, thereby improving mechanical robustness and simplifying manufacturing and assembly processes.

Optionally in some examples, including in at least one preferred example, the battery bracket has a rectangular planar shape. A technical benefit may include ease of integration and predictable load distribution, as a rectangular planar shape of the battery bracket may support efficient placement within limited vehicle chassis space and enable uniform structural support for mounted components.

Optionally in some examples, including in at least one preferred example, the battery bracket comprises a pair of horizontally extending arms, wherein the first traction battery interface is arranged on a first one of the arms, and the second traction battery interface is arranged on a second one of the arms. A technical benefit may include improved packaging flexibility and optimized use of space across the vehicle width, as horizontally extending arms of the battery bracket may allow the traction battery interfaces to be positioned laterally apart, thereby accommodating asymmetric battery geometries and enabling efficient structural support on both sides of the chassis.

Optionally in some examples, including in at least one preferred example, an upper surface of the battery bracket comprises a mounting interface configured to receive an auxiliary electrical component. A technical benefit may include reduced system complexity and improved packaging efficiency, as the provision of a mounting interface on the upper surface of the battery bracket may allow auxiliary electrical components to be co-mounted with the battery system, thereby minimizing the need for separate structural supports and simplifying cable routing and component integration.

Optionally in some examples, including in at least one preferred example, the battery suspension arrangement further comprises a tension element configured to be temporarily connected between the battery bracket and the frame. A technical benefit may include improved handling and safety during assembly or service operations, as the tension element may be temporarily connected between the battery bracket and the frame to support the battery bracket in a suspended position, thereby allowing hands-free alignment or removal of battery packs without requiring full structural fastening.

Optionally in some examples, including in at least one preferred example, the tension element is one of a latch, a strap, or a wire. A technical benefit may include flexibility in implementation and compatibility with different assembly and service scenarios, as the tension element may be selected from a latch, a strap, or a wire, thereby enabling use of readily available components that can be easily attached and removed without specialized tools.

Optionally in some examples, including in at least one preferred example, the tension element comprises a hook or loop at one end, the hook or loop being configured to engage with a corresponding attachment point on the battery bracket or the frame. A technical benefit may include rapid and secure temporary attachment during, for example, service or installation, as a hook or loop at one end of the tension element may engage with a corresponding attachment point on the battery bracket or the frame, thereby enabling fast connection without the need for complex alignment or fastening mechanisms.

According to a second aspect, there is provided a traction battery arrangement, comprising at least one traction battery module, and a battery suspension arrangement according to any one of the examples described above in relation to the first aspect, wherein the at least one traction battery module is supported by the battery suspension arrangement. A technical benefit may include a structurally integrated battery system that combines both the mechanical suspension arrangement and the supported traction battery module. A pre-defined interface between the battery and its support structure may thereby be provided, which may reduce installation complexity, and improve durability by ensuring that the battery is properly suspended.

Optionally in some examples, including in at least one preferred example, the at least one traction battery module is L-shaped. A technical benefit may include improved packaging efficiency and platform scalability, as the L-shaped geometry of the traction battery module may enable asymmetric extension across the chassis, allowing high-voltage components to be placed on the lower side and cell volume to be maximized on the higher side. The L-shaped configuration may facilitate easier integration of additional components, and enable individual traction battery modules to be removed by sliding laterally from the high side such that the low side passes beneath the vehicle frame.

Optionally in some examples, including in at least one preferred example, the battery suspension arrangement supports the L-shaped traction battery module at a vertically lower portion thereof. A technical benefit may include that, by supporting the L-shaped traction battery module at its vertically lower portion, the suspended mass may be positioned close to the vehicle's frame. Bending moments on the bracket may be reduced and vibration isolation of both the battery cells and co-mounted electrical components may be improved.

Optionally in some examples, including in at least one preferred example, the traction battery arrangement further comprises a pair of traction battery modules arranged side by side and spaced apart from each other. A technical benefit may include improved serviceability and modularity, as providing a pair of traction battery modules arranged side by side and spaced apart from each other may enable individual battery modules to be accessed and removed without affecting adjacent traction battery modules.

Optionally in some examples, including in at least one preferred example, the traction battery arrangement further comprises a protection plate connected to a lateral outer surface of the at least one traction battery module. A technical benefit may include improved lateral structural integrity and improved side-impact protection, as a protection plate connected to a lateral outer surface of the traction battery module may serve to mechanically connect adjacent battery modules. The battery arrangement may hereby behave as a unified suspended mass to effectively distribute impact forces across the assembly.

Further effects and features of the second aspect are largely analogous to those described above in relation to the first aspect.

According to a third aspect, there is provided a vehicle comprising the battery suspension arrangement according to any of the examples described above in relation to the first aspect, or a traction battery arrangement according to any one of the examples described above in relation to the second aspect.

Effects and features of the third aspect are largely analogous to those described above in relation to the first and second aspects.

According to a fourth aspect, there is provided a method for disconnecting a traction battery arrangement according to any one of the examples described above in relation to the second aspect, from a frame of a vehicle, the method comprising: detaching a protection plate connecting a traction battery module to an adjacent traction battery module; disconnecting the battery bracket from the traction battery module; and removing the traction battery module laterally from the frame. The fourth aspect of the disclosure may seek to address the challenge of complex and time-consuming servicing of traction battery systems in vehicles, particularly with respect to the removal of individual battery modules from integrated installations, by enabling a removal process that avoids full disassembly of adjacent components and minimizes disruption to co-mounted systems. A technical benefit may include improved serviceability and reduced vehicle downtime, as the method enables individual traction battery modules to be disconnected and removed laterally from the vehicle frame without removing the entire battery system. Detaching a protection plate and disconnecting the battery bracket prior to removal allows for targeted intervention on a single module, thereby supporting efficient aftermarket operations and minimizing the risk of disturbing surrounding electrical or structural subsystems.

Optionally in some examples, including in at least one preferred example, disconnecting the battery bracket from the traction battery module is preceded by: connecting a tension element between the battery bracket and the frame of the vehicle. A technical benefit may include increased safety and ease of handling during the removal process, as connecting a tension element between the battery bracket and the vehicle frame prior to disconnection supports the bracket in a suspended position, thereby preventing unintended movement, reducing the physical load on the operator, and allowing for controlled and stable removal of the traction battery module. Further, components mounted on top of the battery bracket does not need to be disconnected and removed before the battery underneath can be removed, which may save time during service. In some examples, the tension element may be a removable device connected during service operations. In alternative examples, the tension element may be permanently installed on the vehicle, such that it remains in place and ready for use when required. The permanently installed configuration may simplify aftermarket handling by eliminating the need to bring or position a separate tool during battery removal.

Further effects and features of the fourth aspect are largely analogous to those described above in relation to the first, second and third aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary vehicle according to an example.
Fig. 2 is an exemplary traction battery arrangement according to an example.
Figs. 3A - 3B are illustrating an exemplary battery bracket of a battery suspension arrangement according to an example.
Fig. 4 is a battery suspension arrangement according to an example.
Fig. 5 is an exemplary flow chart of a method of disconnecting a traction battery arrangement from a frame of the vehicle.

### DETAILED DESCRIPTION

The detailed description set forth below provides information and examples of the disclosed technology with sufficient detail to enable those skilled in the art to practice the disclosure.

The following disclosure aims at addressing the problem of transferring vibrations and torsional loads from the vehicle frame into traction battery modules, which may adversely affect the durability of sensitive electrical components. A technical benefit may include the ability to mechanically isolate traction battery modules from frame-induced torsion and vibration, thereby reducing mechanical stress on electrical components and improving long-term durability. The disclosure further describes a solution that aims to address the challenge of complex and time-consuming servicing of traction battery systems in vehicles, particularly with respect to the removal of individual battery modules from integrated installations

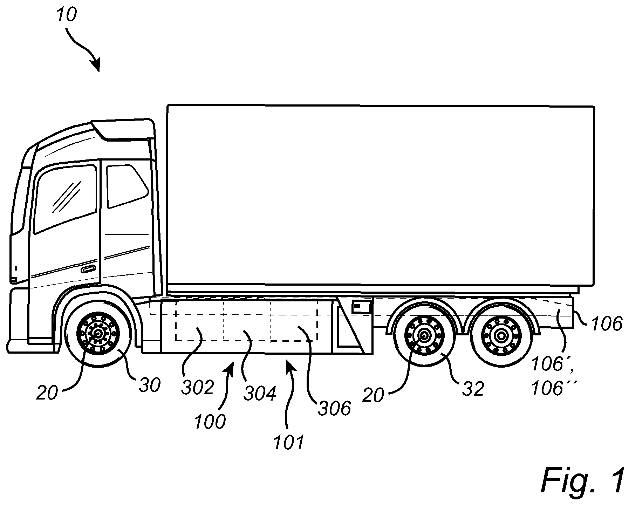

With reference to Fig. 1, an exemplary illustration of a vehicle 10 is provided according to an example. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprise a single electric traction motor connected to the wheels via a conventional propulsion shaft (not shown). The at least one electric traction motor 20 is configured to apply propulsive power to the wheels of the vehicle during propulsion, and to generate electric power during braking.

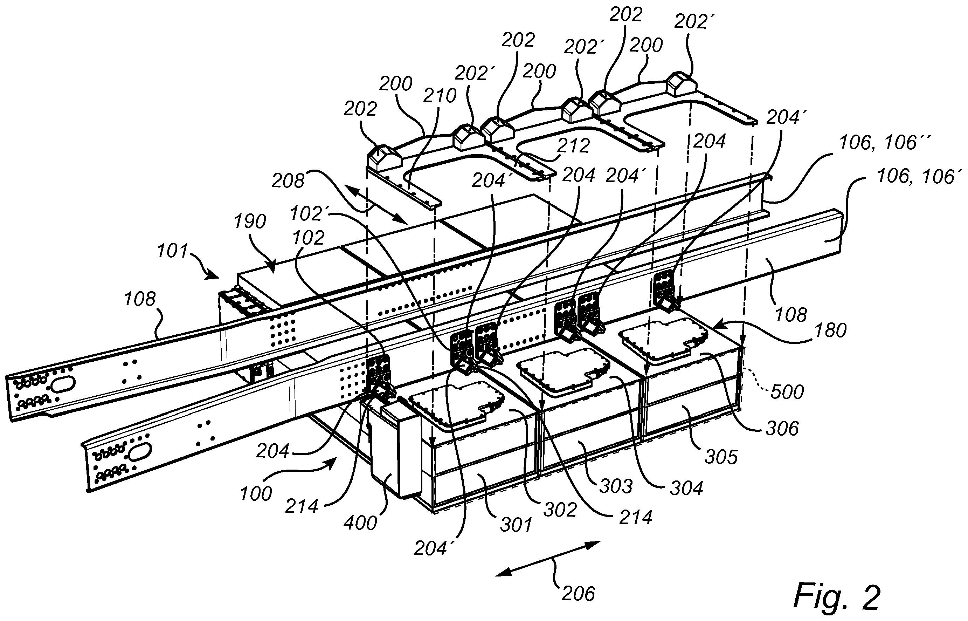

The vehicle 10 further comprises a battery suspension arrangement 100. The battery suspension arrangement 100 suspends a traction battery arrangement 101 from a longitudinal vehicle frame member 106 of the vehicle 10. The exemplified traction battery arrangement 101 comprises a first traction battery module 302, a second traction battery module 304, and a third traction battery module 306, each configured to feed or supply electric power to the electric traction motor 20 during propulsion and to receive electric power during braking. Each traction battery module 302, 304, 306 comprises one or more batteries including a plurality of battery cells configured to store and deliver electric energy to the vehicle's electric systems. The traction battery modules 302, 304, 306 are suspended from a pair of longitudinally extending frame members 106', 106" of the vehicle 10 by means of the battery suspension arrangement 100. The pair of longitudinally extending frame members 106', 106", which are illustrated in further detail in, for example, Fig. 2, preferably extend in the longitudinal direction of the vehicle 10. In order to describe the traction battery arrangement 101 as well as the battery suspension arrangement 100 in further detail, reference is now made to Fig. 2.

With reference to Fig. 2, an exemplary illustration of the traction battery arrangement 101 is shown. The traction battery arrangement 101 comprises at least one traction battery module 302, 304, 306. In the illustrated example, the traction battery arrangement 101 includes a first traction battery module 302, a second traction battery module 304, and a third traction battery module 306, arranged side by side and spaced apart from each other.

The traction battery modules 302, 304, 306 are supported by the above described battery suspension arrangement 100. The battery suspension arrangement 100 comprises a pair of frame brackets 102, 102' configured to be mounted to longitudinal side members 108 of the vehicle frame 106 at a distance from each other along a longitudinal direction of the vehicle 10. Each frame bracket 102, 102' comprises a frame bushing 204, 204' having an abutment portion 214, 214' formed of an elastomeric material and configured to be in abutment with a respective support fork 202, 202'.

The battery suspension arrangement 100 further comprises a battery bracket 200. The battery bracket comprises the pair of support forks 202, 202', wherein each support fork 202, 202' is shaped to engage and rest on the respective frame bushing 204, 204' by gravitational support. The support forks 202, 202' may be structurally integrated with the battery bracket 200. The battery bracket 200 extends in a first direction 206 between the pair of support forks 202, 202', and in a second direction 208 perpendicular to the first direction 206. In order to attach a traction battery module 302, 304, 306 to the battery bracket 200, the battery bracket 200 comprises a first traction battery interface 210 and a second traction battery interface 212, which are spaced apart from each other in the first direction 206 and arranged along the second direction 208 to support the traction battery modules 302, 304, 306. The first traction battery interface 210 and the second traction battery interface 212 are, in the illustrated example, formed as through holes extending vertically through the battery bracket 200. Each through hole is configured to receive a fastener, such as a screw or a bolt, for securely attaching the respective traction battery module 302, 304, 306 to the battery bracket 200.

In the illustrated example, the traction battery modules 302, 304, 306 each has an L-shaped configuration. The battery suspension arrangement 100 supports each L-shaped module at a vertically lower portion 180 thereof. Each L-shaped traction battery module 302, 304, 306 further comprises a vertically higher portion 190 arranged on the lateral side of the frame 106 opposite the vertically lower portion 180. The vertically higher portion 190 extends above a lower level of the vehicle frame 106 and typically accommodates a larger stack of battery cells or houses additional components such as service boxes or electrical interfaces. An asymmetric arrangement is thus provided with the lower portion 180 positioned on one lateral side and the higher portion 190 on the opposite lateral side.

Further, a protection plate 500 is connected to a lateral outer surface 301, 303, 305 of each traction battery module 302, 304, 306, thereby providing lateral reinforcement and optionally linking the modules together for structural integrity. In Fig. 2, the protection plate 500 is illustrated as connected to the lateral outer surface of the lower portion of the L-shaped traction battery module. However, it should be readily understood that a protection plate may additionally or alternatively be arranged at a lateral outer surface of the higher portion of the L-shaped traction battery module.

An auxiliary electrical component 400 is also exemplified in Fig. 2. The auxiliary electrical component 400 is mounted at a longitudinal front end of the traction battery arrangement 101. The auxiliary electrical component 400 may generally include one or more devices responsible for high-voltage system management, power conversion, or control. Examples of such components include, but are not limited to, a charging inlet module, an AC/DC electrical power supply unit, a junction box, a 24V battery box, or other modules for managing electrical distribution, signal interfaces, or coolant routing, as described in the invention disclosure.

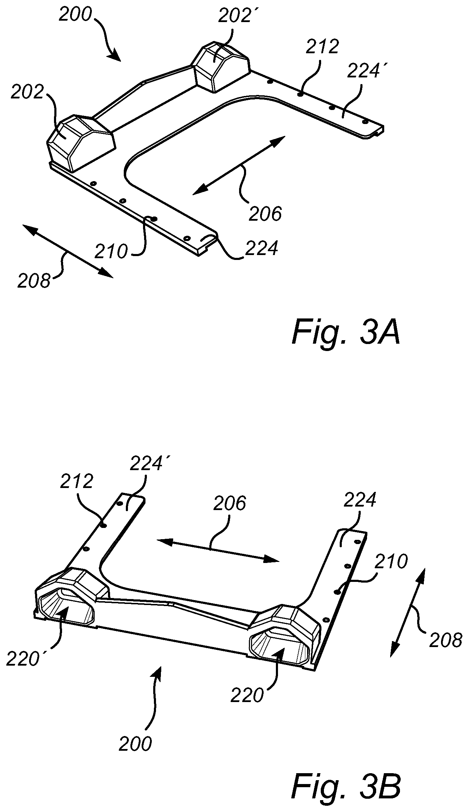

With reference to Figs. 3A and 3B, exemplary perspective views of the above described battery bracket 200 are shown. As described above, the battery bracket 200 forms part of the battery suspension arrangement 100 and is configured to support one or more traction battery modules 302, 304, 306.

The battery bracket 200 exemplified in Figs. 3A and 3B comprises a pair of support forks 202, 202', each including an open-ended slot 220, 220' configured to receive a respective frame bushing 204, 204' through vertical and/or horizontal movement. The open-ended slot design allows the battery bracket 200 to be positioned onto the frame bushings 204, 204' by simply lowering or sliding the bracket into place, without requiring additional fasteners or complex alignment. The open-ended slots 220, 220' are thus arranged as cavity portions of the support forks 202, 202'. In particular, when the battery bracket 200 is connected to the frame bracket described above, each frame bushing 204, 204' is at least partly received within its corresponding support fork 202, 202', i.e., at least partly received within the open-ended slots of the support fork.

The battery bracket 200 further comprises a pair of horizontally extending arms 224, 224'. The first traction battery interface 210 is arranged on the first arm 224, while the second traction battery interface 212 is arranged on the second arm 224'. The first 224 and second 224' arms are spaced apart from each other in the first direction 206, thereby providing the battery bracket 200 with a U-shaped configuration.

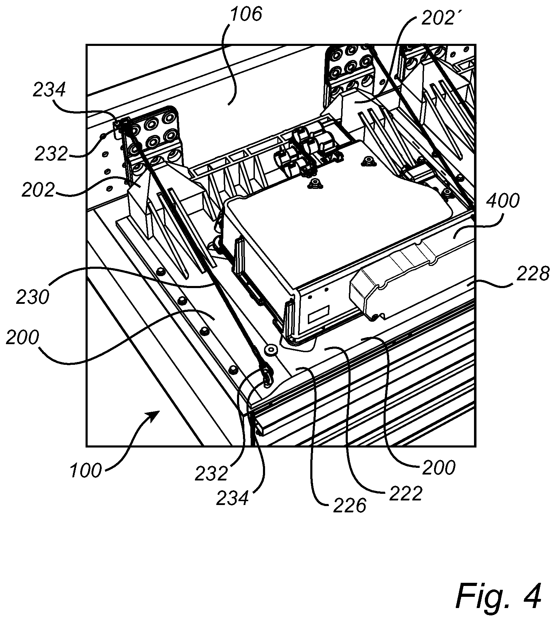

With reference to Fig. 4, an exemplary illustration of the battery suspension arrangement 100 according to another example is shown. In the example illustrated in Fig. 4, the battery bracket 200 has a rectangular planar shape 222, providing a flat and uniform geometry that enables integration within the vehicle chassis and supports the traction battery modules 302, 304, 306. An upper surface 226 of the battery bracket 200 comprises a mounting interface 228 configured to receive the above described auxiliary electrical component 400. The auxiliary electrical component 400 may thus be positioned on the upper surface 226 of the battery arrangement 101. As also illustrated in Fig. 4, battery bracket comprises the above described support forks 202, 202'. Although not illustrated in Fig. 4, the support forks 202, 202' comprise the open-ended slots 220, 220' configured to receive the respective frame bushings 204, 204'.

As further illustrated in Fig. 4, the battery suspension arrangement 100 may additionally comprise a tension element 230 configured to be temporarily connected between the battery bracket 200 and the frame 106. The tension element 230 may be, for example, a latch, a strap, or a wire, allowing the battery bracket 200 to be held in a suspended position relative to the frame 106 during service or assembly operations. The tension element 230 may further comprise a hook or loop 232 at one end. The hook or loop 232 is configured to engage with a corresponding attachment point 234 on either the battery bracket 200 or the frame 106.

It should be understood that the tension element 230, the hook or loop 232, and the attachment point 234 may also be included in the battery bracket 200 described above in relation to Figs. 3A and 3B. In such configurations, the tension element 230 enables secure and stable handling of the battery bracket during installation or removal, reducing the need for external support tools and improving serviceability.

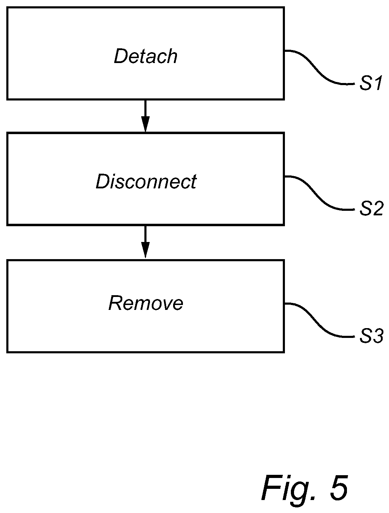

Reference is now made to Fig. 5, which is an exemplary flow chart of a method for disconnecting the traction battery arrangement 101 from the frame 106 of the vehicle 10. The traction battery arrangement 101 comprises, as previously described, the traction battery modules 302, 304, 306, which are supported by the battery bracket 200 of the battery suspension arrangement 100. The battery bracket 200 is mounted to the frame 106 of the vehicle 10 via the support forks 202, 202' engaging the frame bushings 204, 204', as described above in relation to Figs. 1-4.

When initiating the disconnection of the traction battery arrangement, the protection plate 500 is detached S1 from the traction battery modules 302, 304, 306. By detaching the protection plate 500, the connection between the battery modules is released, allowing individual access to the targeted traction battery module 302.

The battery bracket 200 is disconnected S2 from the traction battery module 302. The disconnection of the battery bracket 200 from the traction battery module 302 may include removing fasteners, such as bolts or screws, engaged through the first traction battery interface 210 and the second traction battery interface 212, thereby releasing the mechanical connection between the battery bracket 200 and the traction battery module 302.

The traction battery module 302 can thereafter be removed S3 laterally from the frame 106. The lateral removal may be enabled by the design of the battery suspension arrangement 100 as well as the L-shaped form of the traction battery module 302, which allows the battery module to slide out from the high portion 190 such that the low portion 180 passes beneath the frame 106 without requiring complete disassembly of surrounding components.

Optionally, before disconnecting the battery bracket 200 from the traction battery module 302, the above described tension element 230 may be connected between the battery bracket 200 and the frame 106 of the vehicle 10. The tension element 230, which may be, for example, a latch, a strap, or a wire as previously described, can hereby hold the battery bracket 200 in a suspended position relative to the frame 106 after the mechanical connection between the battery bracket 200 and the traction battery module 302 is released. An operator can hereby ensure that the bracket remains positioned during the removal process and until a new traction battery module is connected to the battery bracket.

### EXAMPLE LIST

Example 1. A battery suspension arrangement (100) for a vehicle (10), the battery suspension arrangement comprising: a pair of frame brackets (102, 102') configured to be mounted to a frame (106) of the vehicle, each frame bracket comprising a frame bushing; a battery bracket (200) comprising a pair of support forks (202, 202'), each support fork being shaped to engage and rest on a respective frame bushing (204, 204') by gravitational support; wherein the battery bracket extends in a first direction (206) between the pair of support forks, and in a second direction (208) perpendicular to the first direction; the battery bracket further comprising a first traction battery interface (210) and a second traction battery interface (212), each configured to support a traction battery module (302, 304, 306); wherein the first and second traction battery interfaces are arranged along the second direction and spaced apart from each other in the first direction.

Example 2. The battery suspension arrangement (100) of example 1, wherein the pair of frame brackets is configured to be mounted to a longitudinal side member (108) of the vehicle frame (106) at a distance from each other along a longitudinal direction of the vehicle.

Example 3. The battery suspension arrangement (100) of any one of examples 1 or 2, wherein each frame bushing (204, 204') comprises an abutment portion (214, 214') configured to be in abutment with a respective support fork (202, 202'), the abutment portion comprising an elastomeric material.

Example 4. The battery suspension arrangement (100) of any one of the preceding examples, wherein each support fork (202, 202') comprises an open-ended slot (220, 220') configured to receive a respective frame bushing (204, 204') through vertical and/or horizontal movement.

Example 5. The battery suspension arrangement (100) of any one of the preceding examples, wherein each frame bushing (204, 204') is at least partly received within a respective support fork (202, 202').

Example 6. The battery suspension arrangement (100) of any one of the preceding examples, wherein each support fork (202, 202') is structurally integrated with the battery bracket.

Example 7. The battery suspension arrangement (100) of any one of the preceding examples, wherein the battery bracket has a rectangular planar shape (222).

Example 8. The battery suspension arrangement (100) of any one of examples 1 - 6, wherein the battery bracket comprises a pair of horizontally extending arms (224, 224'), wherein the first traction battery interface is arranged on a first one of the arms (224), and the second traction battery interface is arranged on a second one of the arms (224').

Example 9. The battery suspension arrangement (100) of any one of the preceding examples, wherein an upper surface (226) of the battery bracket comprises a mounting interface (228) configured to receive an auxiliary electrical component (400).

Example 10. The battery suspension arrangement (100) of any one of the preceding examples, further comprising a tension element (230) configured to be temporarily connected between the battery bracket (200) and the frame (106).

Example 11. The battery suspension arrangement (100) of example 10, wherein the tension element (230) is one of a latch, a strap, or a wire.

Example 12. The battery suspension arrangement (100) of any one of examples 10 or 11, wherein the tension element (230) comprises a hook or loop (232) at one end, the hook or loop (232) being configured to engage with a corresponding attachment point (234) on the battery bracket or the frame.

Example 13. A traction battery arrangement (101), comprising: at least one traction battery module (302, 304, 306), and a battery suspension arrangement (100) according to any one of the preceding examples, wherein the at least one traction battery module (302, 304, 306) is supported by the battery suspension arrangement (100).

Example 14. The traction battery arrangement (101) of example 13, wherein the at least one traction battery module (302, 304, 306) is L-shaped.

Example 15. The traction battery arrangement (101) of example 14, wherein the battery suspension arrangement (100) supports the L-shaped traction battery module at a vertically lower portion (180) thereof.

Example 16. The traction battery arrangement (101) of any one of examples 13 - 15, further comprising a pair of traction battery modules (302, 304, 306) arranged side by side and spaced apart from each other.

Example 17. The traction battery arrangement (101) of any one of examples 13 - 16, further comprising a protection plate (500) connected to a lateral outer surface (301, 303, 305) of the at least one traction battery module (302, 304, 306).

Example 18. A vehicle (10) comprising the battery suspension arrangement (100) according to any of examples 1 - 12, or a traction battery arrangement (101) according to any one of examples 13 - 17.

Example 19. A method for disconnecting a traction battery arrangement (101) of any one of examples 13 - 17 from a frame (106) of a vehicle (10), the method comprising: detaching (S1) a protection plate (500) connecting a traction battery module (302) to an adjacent traction battery module (304); disconnecting (S2) the battery bracket (200) from the traction battery module (302); and removing (S3) the traction battery module (302) laterally from the frame.

Example 20. The method of example 19, wherein disconnecting the battery bracket (200) from the traction battery module (302) is preceded by: connecting a tension element (230) between the battery bracket (200) and the frame (106) of the vehicle (10).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. **In** contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery suspension arrangement (100) for a vehicle (10), the battery suspension arrangement comprising:
a pair of frame brackets (102, 102') configured to be mounted to a frame (106) of the vehicle, each frame bracket comprising a frame bushing;
a battery bracket (200) comprising a pair of support forks (202, 202'), each support fork being shaped to engage and rest on a respective frame bushing (204, 204') by gravitational support; wherein the battery bracket extends in a first direction (206) between the pair of support forks, and in a second direction (208) perpendicular to the first direction; the battery bracket further comprising a first traction battery interface (210) and a second traction battery interface (212), each configured to support a traction battery module (302, 304, 306); wherein the first and second traction battery interfaces are arranged along the second direction and spaced apart from each other in the first direction.

2. The battery suspension arrangement (100) of claim 1, wherein the pair of frame brackets is configured to be mounted to a longitudinal side member (108) of the vehicle frame (106) at a distance from each other along a longitudinal direction of the vehicle.

3. The battery suspension arrangement (100) of any one of claims 1 or 2, wherein each frame bushing (204, 204') comprises an abutment portion (214, 214') configured to be in abutment with a respective support fork (202, 202'), the abutment portion comprising an elastomeric material.

4. The battery suspension arrangement (100) of any one of the preceding claims, wherein each support fork (202, 202') comprises an open-ended slot (220, 220') configured to receive a respective frame bushing (204, 204') through vertical and/or horizontal movement.

5. The battery suspension arrangement (100) of any one of the preceding claims, wherein each frame bushing (204, 204') is at least partly received within a respective support fork (202, 202').

6. The battery suspension arrangement (100) of any one of the preceding claims, wherein each support fork (202, 202') is structurally integrated with the battery bracket.

7. The battery suspension arrangement (100) of any one of the preceding claims, wherein the battery bracket has a rectangular planar shape (222).

8. The battery suspension arrangement (100) of any one of claims 1 - 6, wherein the battery bracket comprises a pair of horizontally extending arms (224, 224'), wherein the first traction battery interface is arranged on a first one of the arms (224), and the second traction battery interface is arranged on a second one of the arms (224').

9. The battery suspension arrangement (100) of any one of the preceding claims, further comprising a tension element (230) configured to be temporarily connected between the battery bracket (200) and the frame (106).

10. The battery suspension arrangement (100) of claim 9, wherein the tension element (230) is one of a latch, a strap, or a wire.

11. A traction battery arrangement (101), comprising:
at least one traction battery module (302, 304, 306), and
a battery suspension arrangement (100) according to any one of the preceding claims, wherein the at least one traction battery module (302, 304, 306) is supported by the battery suspension arrangement (100).

12. The traction battery arrangement (101) of claim 11, wherein the at least one traction battery module (302, 304, 306) is L-shaped.

13. The traction battery arrangement (101) of claim 12, wherein the battery suspension arrangement (100) supports the L-shaped traction battery module at a vertically lower portion (180) thereof.

14. A vehicle (10) comprising the battery suspension arrangement (100) according to any of claims 1 - 10, or a traction battery arrangement (101) according to any one of claims 11 **-** 13.

15. A method for disconnecting a traction battery arrangement (101) of any one of claims 11 - 13 from a frame (106) of a vehicle (10), the method comprising:
detaching (S1) a protection plate (500) connecting a traction battery module (302) to an adjacent traction battery module (304);
disconnecting (S2) the battery bracket (200) from the traction battery module (302); and
removing (S3) the traction battery module (302) laterally from the frame.
